# EUROPÄISCHE PATENTANMELDUNG

(11) **EP 1 936 141 A2**
(43) Veröffentlichungstag der Anmeldung: **25.06.2008**
(21) Anmeldenummer: 07019591.2
(22) Anmeldetag: 06.10.2007
(51) Int. Cl.: F01P 7/16

(54) **Ventil zur Regelung eines strömenden Mediums**

(30) Priorität: 23.12.2006 DE 102006061441
(71) Anmelder: Gustav Wahler GmbH u. Co.KG, 73730 Esslingen (DE)
(72) Erfinder: Gebauer, Markus, 70563 Stuttgart (DE); Clauss, Christof, 73734 Esslingen (DE); Röser, Tilmann, 74354 Besigheim (DE); Bocksrocker, Jörg, 70806 Kornwestheim (DE)
(74) Vertreter: Kratzsch, Volkhard

(57) **Zusammenfassung**

Die Erfindung bezieht sich auf ein Ventil zur Regelung eines strömenden Mediums, insbesondere Thermostatventil (11) für den Kühlkreislauf einer Brennkraftmaschine, mit einem Ventilgehäuse (12), das mindestens einen Zulaufstutzen (13) und mindestens einen Ablaufstutzen (14, 15) aufweist und aus zumindest zwei verbundenen Gehäuseteilen (16, 17) zusammengesetzt ist, mit zumindest einem Ventilelement (20), das mindestens eine zwischen einem Zulaufstutzen (13) und Ablaufstutzen (14, 15) befindliche Ventilöffnung (21) freigibt oder verschließt, und mit einem das Ventilelement (20) betätigenden Aktuator (27), z. B. thermostatischen Arbeitselement (28). Die Gehäuseteile (16, 17) und/oder einzelne, mit einem Gehäuseteil (16, 17) und/oder untereinander fest verbindbare Ventilbauteile (36, 14, 57) sind durch Kleben oder vorzugsweise durch Schweißen befestigt (Fig. 1).

## Beschreibung

Die Erfindung bezieht sich auf ein Ventil zur Regelung eines strömenden Mediums, insbesondere Thermostatventil für den Kühlkreislauf einer Brennkraftmaschine, mit den übrigen Merkmalen im Oberbegriff des Anspruchs 1.

Es sind Ventile dieser Art bekannt, deren Ventilgehäuse z.B. aus zwei Gehäuseteilen besteht, die längs einer Trennebene durch Schrauben oder Klipsen miteinander fest verbunden sind, wobei zur Abdichtung ein Dichtungselement dazwischengefügt ist. Einzelne Bauteile dieses Ventils oder Ventilgehäuses sind jeweils damit einstückig, was z.B. für etwaige Zulaufstutzen und Ablaufstutzen gilt. Auch der Befestigung des Ventils an Haltern od.dgl. dienende Befestigungselemente sind mit dem Ventilgehäuse einstückig. Eine solche Gestaltung ist aufwändig und wenig anpassungsfähig.

Der Erfindung liegt die Aufgabe zugrunde, ein Ventil der eingangs genannten Art zu schaffen, welches hinsichtlich der Gehäuseteile und/oder einzelner Ventilbauteile eine Modulbauweise mit allen sich daraus ergebenden Vorteilen ermöglicht.

Die Aufgabe ist bei einem Ventil der eingangs genannten Art gemäß der Erfindung durch die Merkmale im Anspruch 1 gelöst. Dadurch, dass die mindestens zwei miteinander verbundenen Gehäuseteile und/oder einzelne, mit einem Gehäuseteil und/oder untereinander fest verbindbare Ventilbauteile durch Kleben oder vorzugsweise durch Schweißen befestigt sind, ist hinsichtlich dieser Elemente des Ventils eine Modulbauweise möglich und dabei zugleich eine einfache, kostengünstige und zuverlässige feste und auch druckdichte Verbindung.

Weitere besondere Erfindungsmerkmale und Ausgestaltungen des erfindungsgemäßen Ventils ergeben sich aus den Unteransprüchen.

Weitere Einzelheiten und Vorteile der Erfindung sind in der nachfolgenden Beschreibung erläutert.

Der vollständige Wortlaut der Ansprüche ist vorstehend allein zur Vermeidung unnötiger Wiederholungen nicht wiedergegeben, sondern statt dessen lediglich durch Hinweise auf die Ansprüche darauf Bezug genommen, wodurch jedoch alle diese Anspruchsmerkmale als an dieser Stelle ausdrücklich und erfindungswesentlich offenbart zu geben haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen axialen Längsschnitt eines Ventils zur Regelung eines strömenden Mediums,
- Fig. 2: einen schematischen Schnitt einer Einzelheit des Ventils in Fig. 1.

In den Zeichnungen ist ein Ventil 10 schematisch dargestellt, das generell zur Regelung eines strömenden Mediums dient. Insbesondere ist dieses Ventil 10 als Thermostatventil 11 gestaltet, das für den Kühlkreislauf einer Brennkraftmaschine verwendbar ist. Statt dessen kann das Ventil aber auch als sonstiges Steuerventil, Abgasrückführventil od.dgl. dienen. Das Ventil 10 hat ein Ventilgehäuse 12, welches mindestens einen Zulaufstutzen 13 und mindestens einen Ablaufstutzen, beim gezeigten Ausführungsbeispiel zwei Ablaufstutzen 14,15, aufweist. Das Ventilgehäuse 12 ist aus zumindest zwei Gehäuseteilen 16 und 17 zusammengesetzt, die miteinander dicht und fest verbunden sind. Die Gehäuseteile 16 und 17 sind hier innerhalb einer Trennebene 18 aneinandergesetzt, die im Wesentlichen rechtwinklig zur Längsmittelachse 19 des Ventilgehäuses 12 verläuft. Bei einem anderen, nicht gezeigten Ausführungsbeispiel ist das Ventilgehäuse 12 aus mehr als zwei Gehäuseteilen zusammengesetzt, wobei die Trennebenen, innerhalb denen die einzelnen Gehäuseteile aneinandergesetzt sind, anders als die Trennebene 18 ausgerichtet sein können.

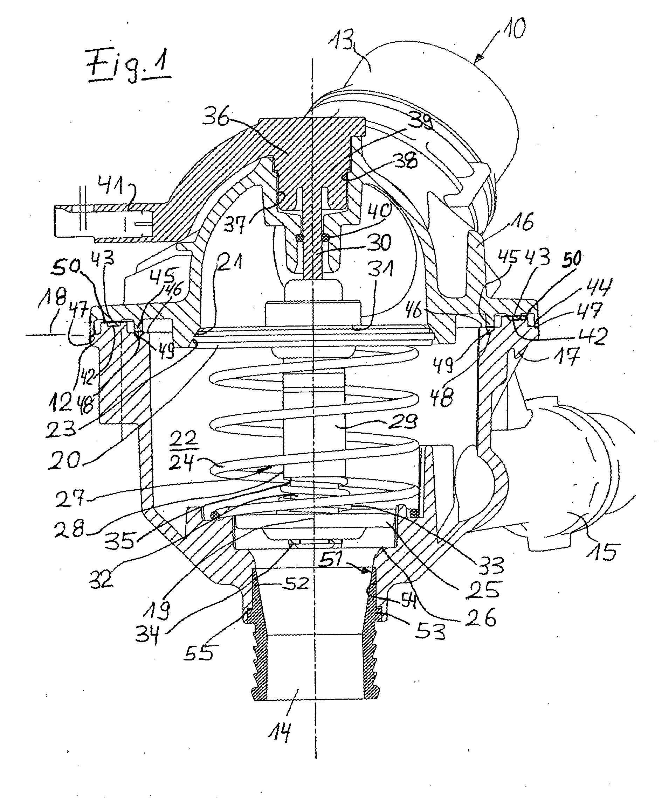

Das Ventil 10, insbesondere Thermostatventil 11, enthält ferner zumindest ein Ventilelement 20, welches eine Ventilöffnung 21 je nach Ventilstellung mehr oder weniger frei gibt oder verschließt. Die Ventilöffnung 21 weist einen z.B. etwa kegelstumpfförmigen Ventilsitz 23 auf, auf dem das hier als Ventilteller ausgebildete Ventilelement 20 in der in Fig. 1 gezeigten Schließstellung aufsitzt und mittels einer Feder 24 in Schließstellung gehalten ist. Das Ventilelement 20 bildet zusammen mit dem Ventilsitz 23 ein Hauptventil. Das Thermostatventil 11 weist ferner ein Kurzschlussventil auf, das einen Ventilteller 25 hat, mittels dessen eine Ventilöffnung 26, die mit dem Ablaufstutzen 14 kommuniziert, steuerbar ist. Das Ventilelement 20 wird von einem Aktuator 27 betätigt. Der Aktuator 27. besteht z.B. aus einem thermostatischen Arbeitselement 28, welches im Inneren eines Gehäuses 29 einen sich bei Temperaturerhöhung ausdehnenden Dehnstoff enthält. In das Gehäuse 29 und den Dehnstoff taucht ein z.B. mit innerer elektrischer Heizung versehener Kolben 30 ein, der an einem Gehäuseteil 16 abgestützt und befestigt ist. Auf dem Gehäuse 29 sitzt das Ventilelement 20 z.B. in der Weise, dass zwischen beiden eine axiale Relativbewegung in einer Axialrichtung möglich ist. Das Gehäuse 29 weist einen Ringanschlag 31 auf, über den bei sich ausdehnendem Dehnstoff im Gehäuse 29 und Gehäuseverschiebung in Fig. 1 nach unten das Ventilelement 20 formschlüssig mitgenommen und nach unten in Öffnungsstellung gegen die Wirkung der Feder 24 bewegt wird, die von unten her am Ventilelement 20 anliegt und sich mit ihrem anderen Ende am Boden des anderen Gehäuseteils 17 abstützt. Der untere Ventilteller 25 ist auf einem Gehäuseabsatz 32 relativ dazu verschiebbar und wird mittels einer Feder 33 axial nach unten gegen einen Endanschlag 34 gedrückt. Die Feder 33 stützt sich mit ihrem anderen Ende an einem Ringanschlag 35 des Gehäuses 29 ab. Der Zulaufstutzen 13 kann z.B. mit der Brennkraftmaschine in Verbindung stehen, während der Ablaufstutzen 15 mit dem zum Kühler führenden Zweig verbunden sein kann. Der andere Ablaufstutzen 14 kann als Bypassstutzen mit dem Rücklauf zur Brennkraftmaschine in Verbindung stehen.

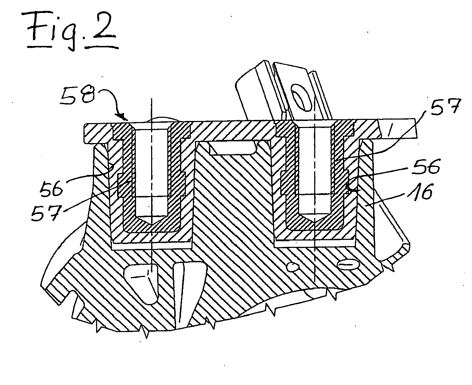

Bei einem derartigen Ventil 10, insbesondere Thermostatventil 11, sind die mindestens zwei Gehäuseteile, wie die Gehäuseteile 16 und 17, und/oder einzelne, mit einem der Gehäuseteile 16, 17 und/oder untereinander fest verbindbare Ventilbauteile, die nachstehend noch näher erläutert werden, durch Kleben oder statt dessen auch durch Schweißen befestigt. Für die Klebebefestigung eignen sich vielfältige Klebematerialien und Klebeverfahren, die alle im Rahmen der Erfindung liegen. Als Schweißbefestigung kommt mit Vorzug ein Ultraschallschweißen, Laserschweißen, Reibschweißen od. dgl. in Betracht. Das Ventilgehäuse 12 und/oder die einzelnen Ventilbauteile bestehen aus Kunststoff. Anhand von Fig. 1 und 2 ist nachfolgend primär die Schweißbefestigung erläutert.

Der Aktuator 27, insbesondere in Gestalt des thermostatischen Arbeitselements 28, weist ein insbesondere elektrisches Heizelement auf, das innerhalb eines Gehäuses 36 enthalten und daher in Fig. 1 nicht weiter sichtbar ist. Dieses Heizelement ist mit seinem Gehäuse 36 in einer Gehäuseaufnahme 37 des Ventilgehäuses 12 aufgenommen, und zwar zumindest im Wesentlichen passgenau. Hierzu ist die Gehäuseaufnahme 37 z.B. als zylindrische Öffnung 38 gestaltet, die über einen Stufenabsatz in einen im Durchmesser größeren Abschnitt übergeht. Das Gehäuse 36 ist mit einem an die Öffnung 38 angepassten stopfenartigen Vorsprung 39 versehen, der in die Öffnung 38 passt. Im Bereich der Gehäuseaufnahme 37 ist das Heizelement mit seinem Gehäuse 36 durch Schweißen oder statt dessen durch Kleben befestigt. Der Klebebereich oder der Schweißbereich befindet sich dort, wo der Vorsprung 39 im Wesentlichen passgenau in die Öffnung 38 eingreift. In Abstand davon ist auf dem Kolben 30 ein Dichtungsring 40, z.B. O-Ring, gehalten, der zur Abdichtung der Schweißstelle oder Klebestelle und ferner zur Abdichtung der elektrischen Anschlüsse des Heizelements mit Gehäuse 36 gegenüber dem Inneren 22 und dem darin geführten strömenden Medium des Ventilgehäuses 12 dient. Diese Befestigung des elektrischen Heizelements mit Gehäuse 36 beschriebener Art im Ventilgehäuse 12 durch Kleben oder Schweißen hat vielfältige Vorteile. Es ergibt sich eine Platz sparende Bauweise und damit ein kompaktes Ventil 10. Ferner können die Herstellkosten reduziert werden, z.B. dadurch, dass der Befestigungsvorgang durch Schweißen oder Kleben während Nebenzeiten z.B. des Spritzgussprozesses geschieht. Vorteilhaft ist ferner eine hohe Flexibilität durch modulare Bauweise für andere Varianten, z.B. verschiedene Steckerlagen und Steckerausführungen des am Ende des Gehäuses 36 vorhandenen Steckers 41. Eine weitere Kosteneinsparung ergibt sich durch die Möglichkeit der Mehrfachverwendung der Bauteile.

Eine weitere Besonderheit des Ventils 10 liegt darin, dass zumindest zwei Gehäuseteile, z.B. die Gehäuseteile 16 und 17, die innerhalb der Trennebene 18 aneinandergesetzt sind, durch Schweißen oder Kleben miteinander fest und dicht verbunden sind. Ein Gehäuseteil, z.B. der in Fig. 1 obere Gehäuseteil 16, weist im Bereich der Trennebene 18 einen zum anderen Gehäuseteil 17 weisenden, vom Gehäuseteil 16 abstehenden Steg 43, insbesondere Ringsteg, auf, der beim Zusammensetzen der Gehäuseteile 16,17 für eine Schweißbefestigung stirnseitig auf einem Ringsteg 50 des Gehäuseteils 17 aufstößt, wobei sich bei der Schweißverbindung die Materialien des Steges 43 und Ringsteges 50 miteinander verbinden. Im Falle einer vorgesehenen Klebeverbindung weist der Gehäuseteil 17 statt dessen eine nur angedeutete Nut 42, insbesondere in Form einer umlaufenden Ringnut, auf, die zum anderen Gehäuseteil 16 hin offen ist, wobei der Steg 43 in der Nut 42 formschlüssig aufgenommen und verklebt wird. Hierbei handelt es sich um die Hauptbefestigungsstelle, die für die entsprechende Festigkeit der Verbindung der Gehäuseteile 16 und 17 sorgt, Zugbeanspruchungen in hohem Maße standhalten kann und zur Optimierung von Festigkeit und Schweißaustrieb in diesem Bereich dient.

In seitlichem, insbesondere radialem, Abstand von dem Steg 43 ist mindestens ein in gleicher Richtung, das heißt in Fig. 1 ebenfalls nach unten, abstehender, insbesondere umlaufender, Randsteg vorgesehen, der mit seiner Stirnseite an einer zugewandten Fläche des anderen Gehäuseteils 17 abgestützt ist und aufsitzt. Beim gezeigten Ausführungsbeispiel sind ein äußerer Randsteg 44 und ein innerer Randsteg 45 jeweils in Abstand von dem Steg 43 vorgesehen. Der äußere Randsteg 44 verläuft auf der Außenseite und der innere Randsteg 45 innenseitig des Gehäuseteils 16, wobei beide Randstege 44, 45 zur zugewandten Stirnfläche 46 des anderen Gehäuseteils 17 hin gerichtet sind. Man erkennt, dass der auf der Außenseite des Gehäuseteils 16 verlaufende Randsteg 44 mit seiner Stirnseite 47 schräg verläuft. In gleicher Weise verläuft auch der dieser Stirnseite 47 zugeordnete Bereich der Stirnfläche 46 des Gehäuseteils 17 schräg. Der Schrägverlauf ist derart, dass diese beiden Flächen beim gezeigten Ausführungsbeispiel nach außen und unten schräg abfallen. Aufgrund dieses Schrägverlaufs der miteinander in Berührung stehenden Flächen wird bei der Herstellung durch Schweißen ein Austrieb radial nach außen hin vermieden.

Beim Verbinden z.B. durch Schweißen wird etwaiges ausgetriebenes Material statt dessen nach innen und in Richtung zur Verbindung zwischen den Stegen 43 und 50 gezwungen.

Der andere, innenseitig des Gehäuseteils 16 verlaufende Randsteg 45 ist auf seiner der Stirnfläche 46 zugewandten Stirnseite im Querschnitt etwa keilförmig zugespitzt, was durch die Spitze 48 verdeutlicht ist. Die zugewandte Stirnfläche 46 des Gehäuseteils 17 enthält eine angepasste, etwa V-förmig vertiefte Nut 49, insbesondere Ringnut. Diese Gestaltung ergibt sich dann, wenn im Bereich der miteinander in Kontakt stehenden Flächen eine Schweißbefestigung erfolgt analog derjenigen im Bereich des Steges 43 und des Ringsteges 50. Im Bereich des Steges 43 und des Ringsteges 50 sowie bei den beiden Randstegen 44 und 45 erfolgt somit eine Schweißbefestigung der beschriebenen, jeweils zugewandten Aufsitzflächen, mit denen der Steg 43 und die Randstege 44 und 45 im Bereich des Ringsteges 50 bzw. der Stirnfläche 46 des anderen Gehäuseteils 17 aufsitzen. Die Schweißbefestigung im Bereich des inneren Randsteges 45, insbesondere bei der in die Nut 49 eingreifenden, etwa keilförmig zugespitzten Spitze 48, führt dazu, dass in diesem Bereich ein Schweißaustrieb in der Zeichnung radial nach innen verhindert wird, was im Hinblick auf das im Inneren 22 geführte strömende Medium nachteilig wäre. Statt dessen wird bei der Befestigung ein Schweißaustrieb radial nach außen in Richtung des Steges 43 erzwungen. Die Befestigung mittels des inneren Randsteges 45 hat ferner den Vorteil, dass dadurch die Stelle der Hauptverbindung, nämlich des Steges 43 und des Ringsteges 50, im Innenbereich geschützt und abgedichtet ist gegen Beaufschlagung des im Inneren 22 strömenden Mediums, das z.B. als Kühlwasser in Form eines Wasser-Glykolgemisches aggressiv ist. Dieses kann somit nicht an die Hauptverbindungsstelle gelangen. Von Vorteil ist ferner, dass diese radial innere feste Verbindung mittels des Randsteges 45 eine zusätzliche Abstützung der Hauptbefestigungsstelle 43,50 unter dem Druck im Inneren 22 bewirkt.

Die Hauptbefestigung im Bereich der Stege 43 und 50 wird von der inneren Befestigungsstelle mittels des Randsteges 45 hinsichtlich der Beanspruchung besonders geschützt. Der im Inneren 22 herrschende Druck könnte bei der Befestigung zwischen den Stegen 43 und 50, und zwar auf der Innenseite, eine Schälbelastung hervorrufen, was z.B. für eine Schweißverbindung kritisch wäre. Aufgrund der Abstützung mittels des äußeren Randsteges 44 wird hinsichtlich der Hauptbefestigungsstelle 43, 50 eine derartige Schälbelastung vermieden. Da außerdem durch den inneren Randsteg 45 die Hauptbefestigungsstelle vor dem Angriff des im Inneren 22 geführten Mediums geschützt ist, ist für diese Befestigungsstelle 43,50 eine erhöhte Festigkeit und gesteigerte Lebensdauer erreicht.

Eine weitere Besonderheit des Ventils 10 liegt darin, dass mindestens ein Zulaufstutzen, z.B. der Zulaufstutzen 13, und/oder ein Ablaufstutzen, z.B. der Ablaufstutzen 14 und/oder 15, an einem der Gehäuseteile 16,17 durch Schweißen oder Kleben befestigt ist. Dies wird nachfolgend anhand des Ablaufstutzens 14 verdeutlicht, wobei die gleiche Befestigungsmethode auch für den Zulaufstutzen 13 und/oder Ablaufstutzen 15 vorgesehen sein kann.

Der Ablaufstutzen 14 weist ein Befestigungsende 51 mit einem Rohrrand 52 und einem seitlich, insbesondere radial, davon abstehenden Flansch 53 auf. In gleicher Weise kann sowohl ein als Linearteil als auch ein als z.B. etwa winkelförmig verlaufendes Knieteil des Ablaufstutzens 14 beschaffen sein. Der aufnehmende Gehäuseteil 17 weist eine den Rohrrand 52 aufnehmende Einstecköffnung 54 auf, die von einer Stützfläche 55 umgeben ist, an der der Flansch 53 anliegt. Im Bereich der Einstecköffnung 54 mit darin eingreifendem Rohrrand 52 und/oder der Stützfläche 55 mit anliegendem Flansch 53 ist eine Befestigung durch Schweißen oder Kleben vorgesehen. Hierdurch wird eine hohe Flexibilität durch modulare Bauweise für verschiedene Varianten erreicht. Außerdem ergibt sich eine Kosteneinsparung durch die Möglichkeit der Mehrfachverwendung der Bauteile. Es versteht sich, dass statt des Ablaufstutzens 14 auch beliebige andere Stutzen des Ventils 10 in analoger Weise durch Schweißen oder Kleben an einem der Gehäuseteile 16, 17 befestigt werden können.

Anhand von Fig. 2 ist verdeutlicht, dass an einem Gehäuseteil, z.B. dem Gehäuseteil 16, in entsprechende Sacklochbohrungen 56 passende Gewindebuchsen 57 eingesetzt und darin durch Schweißen oder Kleben befestigt werden. Beim Beispiel gemäß Fig. 2 sind diese Gewindebuchsen 57 in einem Bauteil 58 gehalten, der auf diese Weise mit dem Gehäuseteil 16 verbunden werden kann.

Ferner ist beim Ventil 10 vorgesehen, dass an einem der Gehäuseteile 16,17 ein nicht weiter gezeigtes Befestigungsmodul ähnlich z.B. dem Bauteil 58 durch Schweißen oder Kleben befestigt ist, wobei dieses Befestigungsmodul zur Befestigung des Ventils 10 an einem Halter dienen kann. Auch hierzu gilt der Vorteil einer Kosteneinsparung durch die Möglichkeit der Mehrfachverwendung einzelner Bauteile.

## Patentansprüche

1. Ventil zur Regelung eines strömenden Mediums, insbesondere Thermostatventil (11) für den Kühlkreislauf einer Brennkraftmaschine, mit einem Ventilgehäuse (12), das mindestens einen Zulaufstutzen (13) und mindestens einen Ablaufstutzen (14,15) aufweist und aus zumindest zwei verbundenen Gehäuseteilen (16,17) zusammengesetzt ist, mit zumindest einem Ventilelement (20), das mindestens eine zwischen einem Zulaufstutzen (13) und Ablaufstutzen (14,15) befindliche Ventilöffnung (21) freigibt oder verschließt, und mit einem das Ventilelement (20) betätigenden Aktuator (27), z.B. thermostatischen Arbeitselement (28),
**dadurch gekennzeichnet,**
**dass** die Gehäuseteile (16,17) und/oder einzelne, mit einem Gehäuseteil (16,17) und/oder untereinander fest verbindbare Ventilbauteile (36,14,57) durch Kleben oder vorzugsweise durch Schweißen befestigt sind.

2. Ventil nach Anspruch 1,
**dadurch gekennzeichnet,**
**dass** das Ventilgehäuse (12) und/oder einzelne Ventilbauteile (36,14,57) aus Kunststoff bestehen.

3. Ventil nach Anspruch 1 oder 2,
**dadurch gekennzeichnet,**
**dass** die Schweißbefestigung durch Ultraschallschweißen, Reibschweißen, Laserschweißen od. dgl. erfolgt.

4. Ventil nach einem der Ansprüche 1 bis 3,
**dadurch gekennzeichnet,**
**dass** der Aktuator (27), insbesondere das thermostatische Arbeitselement (28), ein insbesondere elektrisches Heizelement mit Gehäuse (36) aufweist, das in einer Gehäuseaufnahme (37) des Ventilgehäuses (12) aufgenommen ist, und dass das Heizelement mit seinem Gehäuse (36) in der Gehäuseaufnahme (37) durch Schweißen oder Kleben befestigt ist.

5. Ventil nach einem der Ansprüche 1 bis 4,
**dadurch gekennzeichnet,**
**dass** zumindest zwei Gehäuseteile (16,17) innerhalb einer Trennebene (18) aneinandergesetzt und durch Schweißen oder Kleben fest und dicht verbunden sind.

6. Ventil nach einem der Ansprüche 1 bis 5,
**dadurch gekennzeichnet,**
**dass** ein Gehäuseteil (16) einen zum anderen Gehäuseteil (17) weisenden, abstehenden Steg (43), insbesondere Ringsteg, aufweist und über den Steg (43) an dem anderen Gehäuseteil (17) durch Schweißen oder Kleben befestigt ist, wobei bei der Schweißbefestigung sich die Materialien des Steges (43) und des Gehäuseteils (17) miteinander verbinden und bei der Klebebefestigung der Steg (43) in eine Nut (42) des anderen Gehäuseteils (17) eingreift.

7. Ventil nach einem der Ansprüche 1 bis 6,
**dadurch gekennzeichnet,**
**dass** in seitlichem, insbesondere radialem, Abstand von dem Steg (43), insbesondere Ringsteg, mindestens ein in gleicher Richtung abstehender, insbesondere umlaufender, Randsteg (44,45) vorgesehen ist, der mit seiner Stirnseite (47,48) an einer zugewandten Fläche (46,49) des anderen Gehäuseteils (17) abgestützt ist und aufsitzt.

8. Ventil nach Anspruch 7,
**dadurch gekennzeichnet,**
**dass** ein Randsteg (44) auf der Außenseite des Gehäuseteils (16) verläuft.

9. Ventil nach Anspruch 7,
**dadurch gekennzeichnet,**
**dass** ein Randsteg (45) innenseitig des Gehäuseteils (16) in Abstand von dem Steg (43) verläuft.

10. Ventil nach einem der Ansprüche 7 bis 9,
**dadurch gekennzeichnet,**
**dass** auf jeder Seite in Abstand von dem Steg (43), insbesondere Ringsteg, ein Randsteg (44,45) vorgesehen ist, von denen der eine Randsteg (44) auf der Außenseite und der andere Randsteg (45) innenseitig des Gehäuseteils (16) verläuft.

11. Ventil nach einem der Ansprüche 7 bis 10,
**dadurch gekennzeichnet,**
**dass** der auf der Außenseite des Gehäuseteils (16) verlaufende Randsteg (44) mit seiner Stirnseite (47) und die dieser zugewandte Fläche (46) des anderen Gehäuseteils (17) in Bezug auf die Trennebene (18) der Gehäuseteile (16,17) derart schräg verlaufen, dass diese Flächen (47,46) nach innen oder nach außen hin schräg abfallen.

12. Ventil nach einem der Ansprüche 9 bis 11,
**dadurch gekennzeichnet,**
**dass** der innenseitig des Gehäuseteils (16) verlaufende Randsteg (45) auf seiner Stirnseite (48) im Querschnitt etwa keilförmig zugespitzt ist und dass die zugewandte Fläche (46) des anderen Gehäuseteils (17) eine angepasste, etwa V-förmig vertiefte Nut (49), insbesondere Ringnut, aufweist, in der der Randsteg (45) mit der etwa keilförmig zugespitzten Fläche (48) formschlüssig aufgenommen ist.

13. Ventil nach Anspruch 6,
**dadurch gekennzeichnet,**
**dass** im Bereich der Nut (42) und des darin aufgenommenen Steges (43) eine Klebebefestigung vorgesehen ist.

14. Ventil nach einem der Ansprüche 7 bis 12,
**dadurch gekennzeichnet,**
**dass** im stirnseitigen Bereich des jeweiligen Randsteges (44,45) des zweiten Gehäuseteils (16) und der zugewandten Aufsitzfläche (46,49) des ersten Gehäuseteils (17) eine Schweißbefestigung oder Klebebefestigung vorgesehen ist.

15. Ventil nach einem der Ansprüche 1 bis 14,
**dadurch gekennzeichnet,**
**dass** mindestens ein Zulaufstutzen (13) oder Ablaufstutzen (14,15) an einem der Gehäuseteile (16,17) durch Schweißen oder Kleben befestigt ist.

16. Ventil nach Anspruch 15,
**dadurch gekennzeichnet,**
**dass** der Zulaufstutzen (13) oder Ablaufstutzen (14,15) ein Befestigungsende (51) mit einem Rohrrand (52) und einem seitlich, insbesondere radial, davon abstehenden Flansch (53) aufweist und dass der aufnehmende Gehäuseteil (17) eine den Rohrrand (52) aufnehmende Einstecköffnung (54) aufweist, die von einer Stützfläche (55) umgeben ist, an der der Flansch (53) anliegt, und dass im Bereich der Einstecköffnung (54) mit eingreifendem Rohrrand (52) und/oder der Stützfläche (55) mit anliegendem Flansch (53) eine Schweißbefestigung oder Klebebefestigung vorgesehen ist.

17. Ventil nach einem der Ansprüche 1 bis 16,
**dadurch gekennzeichnet,**
**dass** an einem Gehäuseteil (16,17) ein der Befestigung an einem Halter dienendes Befestigungsmodul durch Schweißen oder Kleben befestigt ist.

18. Ventil nach einem der Ansprüche 1 bis 17,
**dadurch gekennzeichnet,**
**dass** in ein Gehäuseteil (16,17) der Befestigung an einem Halter dienende Gewindebuchsen (57) eingesetzt und darin durch Schweißen oder Kleben befestigt sind oder in einem Bauteil (58) gehalten sind, der seinerseits entsprechend befestigt ist.
